# EUROPEAN PATENT APPLICATION

(11) **EP 4 721 854 A1**
(43) Date of publication of application: **08.04.2026**
(21) Application number: 25205738.5
(22) Date of filing: 30.09.2025
(51) Int. Cl.: B01J 19/00, B01J 19/24

(54) **REACTOR**

(30) Priority: 30.09.2024 IT 202400021690
(71) Applicant: ROSETTI MARINO S.P.A., 48122 Ravenna (IT)
(72) Inventor: BASINI, Luca Eugenio Riccardo, 20129 MILANO (IT); CIPOLLETTA, Mariasole, 40128 BOLOGNA (IT); MARINI, Alessia, 20161 MILANO (IT)
(74) Representative: Roncuzzi, Davide

(57) **Abstract**

A reactor (1) for heterogeneous catalysis processes in which a containment shell (10) is delimited internally by an elongated cavity (11); provided with an operating station (12) arranged in an intermediate position internally delimited by an air space (14) peripherally delimited by a first wall (140) having geometric shape similar to that of the cavity (11); at least one monolithic body (19) contained inside said air space (14), electrically conductive in order to be electrically heatable by Joule effect so as to trigger and effectively control a chemical transformation reaction of the mixture; each monolithic body (19) being delimited peripherally by a second wall (190); the second wall (190) being shaped in a geometrically conjugate manner with the first wall (140).

## Description

The present invention refers to a reactor designed to accelerate chemical reactions via the use of a catalyst. In particular, the invention refers to a catalytic reactor designed to accelerate chemical reactions involving solid-gas interactions. More specifically, the invention describes an electrified catalytic reactor designed to accelerate chemical reactions involving solid-gas interactions and suitable to provide the heat necessary to facilitate the chemical reactions, minimizing heat dispersion.

### DESCRIPTION OF STATE OF THE ART

A catalytic reactor is a device used in numerous chemical processes in order to accelerate reactions due to the use of a catalyst, a substance able to lower the activation energy of the reaction, without taking part in it, guarantee control of the reaction and maintain long-term operating stability.

Normally, each catalytic reactor comprises a containment shell which is provided with a reagent supply duct and a reaction product discharge duct and is designed internally to optimize contact between the reagents and the catalyst. The shell is made of metallic material able to resist corrosion and the high temperatures that accompany the reactions, and its function is to contain the entire system, protecting it from the external environment and guaranteeing the structural integrity of the reactor during use. The shell is lined internally with thermal insulating material organized in layers adjacent to the wall which delimits the shell internally in order to reduce heat dispersion towards the outside and protect the shell from the high temperatures generated inside the reactor, both in the case of exothermic reactions, favoured in energy terms due to their very nature, and in the case of endothermic reactions, the triggering/maintenance of which requires the contribution of heat to the reagents. Within the layers of insulating material the reactor has a reaction chamber containing a support which houses the catalyst material. This support generally has a monolithic structure, hence it is usually referred to as "monolith" and is geometrically shaped in a manner similar to a cylinder, constructed with non-metallic material, generally ceramic, and provided with a plurality of honeycomb structures and/or cells which extend longitudinally to maximize the areas exposed to the flow of the reagent gases inside the reactor. Said areas define the so-called primary surfaces, which are normally coated with layers of material having chemical and physical characteristics adapted for the inclusion of catalytically active species, normally indicated by the term secondary coating surfaces.

Various technologies are used to produce said coating surfaces. In some cases, the primary surfaces of the non-metallic monoliths are covered by a wash-coating process with a porous secondary surface which contains the catalytically active metals. However, in some cases, the layer of material deposited by wash-coating is not stable in the reaction conditions, and it shatters and separates from the monolithic support. To avoid this drawback, in some applications it is useful to include in the monolithic structures fixed beds composed of granule or pellet catalysts, to obtain the catalytic effect within the monolith. Said solution can be implemented in addition to the secondary surfaces that may have deteriorated during use or to completely replace the same in order to simplify the technological production process of the monolith. However, the inclusion of pellet catalysts, particularly for large reactors which are crossed by gas flows at high linear speed, can cause pressure losses that lead to pressure drops in the reactor outlet stream, and these are not acceptable in industrial applications.

In the case of electrified reactors, monolithic structures produced in various ways, they can be connected to the external electric circuit by copper connections of various types, typically but without limitation copper foam monoliths, interposed between the non-metallic monolith and perforated metallic electrodes which give the reagents access to the reaction environment and allow the products to leave the reactor. The electric power supply current can be direct or alternating. In some devices representative of the state of the art (Riccardo Balzarotti, Matteo Ambrosetti, Alessandra Beretta, Gianpiero Groppi, Enrico Tronconi; "Investigation of packed conductive foams as a novel reactor configuration for methane steam reforming"; Chemical Engineering Journal 391 (2020) 123494*),* the high porosity copper structure is compressed between the metallic electrode and the non-metallic monolith which transfers the energy by Joule effect to the reaction environment. The electrified catalytic monolith is then surrounded by an insulating layer to avoid direct contact with the reactor walls. It should be noted that catalytic reactors structured in this way have the drawback that they can be effectively used only in small laboratories or pilot plants for carrying out experimental tests, but not in production units in the chemical and/or energy industry since the relative metallic electrodes and the copper structures for connection to the electric circuit can be damaged in conditions of high temperature and in the presence of the relative reaction gases, for example, in the endothermic processes of steam-CO₂ reforming, reverse water gas shift, steam cracking and ammonia cracking. In further detail, the metallic parts of the electrodes and electric circuits can favour disproportionation reactions of the CO and cracking of the hydrocarbons and become embrittled due to the infiltrations of carbon deposits in the metallic layers which occur in metal dusting processes. Furthermore, even in the absence of carbon species, it is known that also the presence of hydrogen leads to embrittlement of the metallic structures with processes of hydrogen embrittlement or hydrogen assisted cracking.

As already mentioned, although coating the primary surfaces of the non-metallic monoliths by means of the wash-coating process allows a secondary surface structure to be generated containing the catalytic species organized in a large number of secondary support layers with very variable chemical compositions, the surface structure generated is accompanied by the further drawback of fragmentation of the secondary surface and dispersion of the catalytic layer following prolonged use typical of industrial applications. The practice of filling monolithic structures with pellets as above is designed to overcome this drawback, but also this solution can be successfully applied only in small laboratory systems, or small systems in general, since it is accompanied by increasingly significant pressure losses as the scale of the chemical plants increases. Furthermore, the impossibility of guaranteeing that the coupling between the inner wall of the shell and the outer wall of the monolith is of conjugate type can create empty spaces and facilitate by-pass of the catalytic bed by the reagents, particularly at high pressures. This means that a fraction of the reagent mixture can pass through the reactor, following preferential paths not envisaged at the design stage; contact with the catalyst is insufficient along these paths, resulting in deterioration of the monolith structure, inevitably accompanied by a reduction in the conversion degree of the reaction, and therefore incomplete conversion of the reagents and the formation of undesired products.

As described above, the problem of producing electrified catalytic reactors for industrial use without the drawbacks deriving from contact of the gaseous mixtures at high temperature with the metallic parts of the electric circuits, thermo-mechanical stress due to the different thermal expansion of the materials composing the reactors, by-passing of the reaction zones in the areas of contact between the monolithic structures and the containment walls thereof, fragmentation of the secondary surfaces of the monoliths and pressure losses when using granular or pellet catalysts with improved thermal insulation, is currently unresolved and represents an interesting challenge for the applicant with the object of making the use of said devices more sustainable in energy terms in addition to minimizing the related maintenance costs.

In view of the situation described above, a catalytic reactor would be desirable which, in addition to limiting and possibly overcoming the drawbacks of the known art illustrated above, defines a new standard for said devices which would be particularly suitable for industrial use.

### SUMMARY OF THE PRESENT INVENTION

The present invention refers to a reactor designed to accelerate chemical reactions via the use of a catalyst. In particular, the invention refers to a catalytic reactor designed to accelerate chemical reactions that involve solid-gas interactions. More specifically, the invention describes an electrified catalytic reactor designed to accelerate chemical reactions that involve solid-gas interactions and suitable to provide the heat necessary for facilitating the chemical reactions, minimizing heat dispersion.

The above-mentioned drawbacks are remedied by the present invention according to at least one of the following claims.

According to a possible variation of the present invention, a reactor method is provided for heterogeneous catalysis processes in which a containment shell is delimited by a first upper portion and by a second lower portion and internally by an elongated cavity; provided with an operating station arranged in an intermediate position between said first upper portion and said second portion and delimited internally by an air space delimited internally by a first wall having geometric shape similar to that of said cavity; at least one monolithic body contained inside said air space, made of non-metallic material, structured so that it can be crossed by a mixture of reagents and electrically conductive so as to be electrically heatable by Joule effect to trigger and effectively control a chemical transformation reaction of said mixture; each said monolithic body being delimited peripherally by a second wall; characterized in that each said monolithic body incorporates active catalytic centres and said second wall is shaped in a geometrically conjugate manner with said first wall.

According to an embodiment as described above, said active catalytic centres consist of metallic atoms or active metallic aggregates mixed with construction material of each said monolithic body.

According to an embodiment as described above, each said monolithic body is associated with a first conductor member and a second conductor member for the relative electrification, both made of non-metallic materials inert to said reagent mixtures.

According to an embodiment as described above, said conductor members comprise respectively a first plate having circular or annular shape and a second plate having circular or annular shape, electrically connected to said monolithic body on sides opposite to said operating station or both on the side of said first upper portion or both on the side of said second lower portion.

According to an embodiment as described above, said air space is made of non-metallic material, preferably of ceramic type, and has the characteristics of an electric insulator and heat shield which reduces heat dispersion from the electrified monolithic body to the outer wall of the reactor.

According to an embodiment as described above, at least one of said monolithic body, first plate and a second plate is produced via an additive manufacturing process or integrally with each said monolithic body.

According to an embodiment as described above, said air space is produced by means of casting processes using non-conductive and refractory cements.

According to an embodiment as described above, said air space is integral with each said monolithic body and is made of the same material as each said monolithic body via an additive manufacturing process or via processes that allow the continuous joining thereof.

According to an embodiment as described above, the reactor comprises first distributor means provided with a first distributor designed to feed said reagent mixture to said monolithic body and a second distributor designed to discharge said reaction products from said monolithic body; said first distributor and second distributor being carried by said first upper portion and, respectively, by said second portion or both by said first lower portion.

According to an embodiment as described above, said first distributor is of the swirling type to feed said reagent mixture in a swirling manner to each said monolithic body. According to an embodiment as described above, said monolithic body comprises a feed portion and a discharge portion side by side, separated from said air space by a respective partition, and connected on the side of said second portion to define a U-shaped path for a flow of said reagent mixture and relative said reaction products. According to an embodiment as described above, said first plate is connected to said feed portion and said second plate is connected to said discharge portion, each being shaped in a conjugate manner to the respective said feed portion and to said discharge portion.

According to an embodiment as described above, at least one said monolithic body is organized in a plurality of monolithic cartridges arranged integrally between said first upper portion and said second lower portion inside said operating station.

According to an embodiment as described above, each said monolithic body is designed to contain granular or pellet catalysts.

### BRIEF DESCRIPTION OF THE FIGURES

Further characteristics and advantages of the reactor according to the present invention will appear clearer from the following description, provided with reference to the attached figures which illustrate some non-limiting embodiment examples, in which identical or corresponding parts of the same reactor are identified by the same reference numbers for the sake of practicality, to which superscripts will be applied if necessary. In particular:
- figures 1a and 1b are respectively a schematic side elevation view of a first embodiment of a catalytic reactor according to the present invention, part section and part view and with parts removed for clarity and, respectively, a plan view of a first detail taken from figure 1a;
- figures 1c and 1d are respectively a schematic side elevation view of a second embodiment of a catalytic reactor according to the present invention, part section and part view and with parts removed for clarity and, respectively, a plan view of a first detail taken from figure 1c;
- figure 2a is a section view on an enlarged scale of a detail illustrated both in figure 1a and in figure 1c on an enlarged scale and with parts removed for clarity;
- figure 2b is a view of a detail taken from figure 2a on an enlarged scale and with parts removed for clarity;
- figures 3a and 3b are respectively a schematic side elevation view of a third and a fourth embodiment of a catalytic reactor according to the present invention, part section and part view and with parts removed for clarity;
- figures 4a and 4b are respectively a schematic side elevation view of a fifth embodiment of a catalytic reactor according to the present invention, part section and part view and with parts removed for clarity and, respectively, a plan view of a first detail taken from figure 4a and a plan view of a second detail taken from figure 4a;
- figure 4c is a schematic side elevation view of a sixth embodiment of a catalytic reactor according to the present invention, part section and part view and with parts removed for clarity;
- figures 5a, 5b and 5c are respectively a schematic side elevation view of a seventh embodiment of a catalytic reactor according to the present invention, part section and part view and with parts removed for clarity and, respectively, a plan view of a first detail taken from figure 5a and a variation of figure 5b;
- figure 5d is a schematic side elevation view of an eighth embodiment of a catalytic reactor according to the present invention, part section and part view and with parts removed for clarity; and
- figures 6a, 6b and 6c are respectively a schematic side elevation view of a ninth embodiment of a catalytic reactor according to the present invention, part section and part view and with parts removed for clarity and, respectively, a plan and section view of a first and a second detail taken from figure 6a.

### DETAILED DESCRIPTION OF THE PRESENT INVENTION

Before describing in detail the preferred embodiments of the present invention or details thereof, it is useful to point out that the relative protective scope is not limited to the particular embodiments described below. The disclosure and description in the present document are illustrative and explanatory of one or more currently preferred embodiments and variations, and it will be clear to persons skilled in the art that various changes in the design, organization, order of functioning, means of functioning, structures of the equipment and position, methodology and use of mechanical equivalents can be made without departing from the spirit of the invention. Furthermore, it is important to understand that the attached figures and drawings have the purpose of clearly illustrating and disclosing embodiments currently preferred to a person skilled in the art, but they are not drawings that illustrate how these embodiments should be executed in practice or real representations of final products; on the contrary, these figures can comprise simplified conceptual views to facilitate understanding or provide an easier quicker explanation. Furthermore, the relative dimensions and arrangement of the components can differ from those shown and still function in the spirit of the invention.

It will be seen that various directions such as "upper", "lower", "left", "right", "front", "rear" and so on are carried out only with respect to the explanation in combination with the drawings and that the components can be oriented differently, for example during transport and production, and during operation. Since many different and distinct embodiments are possible in the context of the concepts taught herein, and since multiple modifications can be made to the embodiments described here, the details provided below shall be interpreted as illustrative and non-limitative of the spirit of the invention.

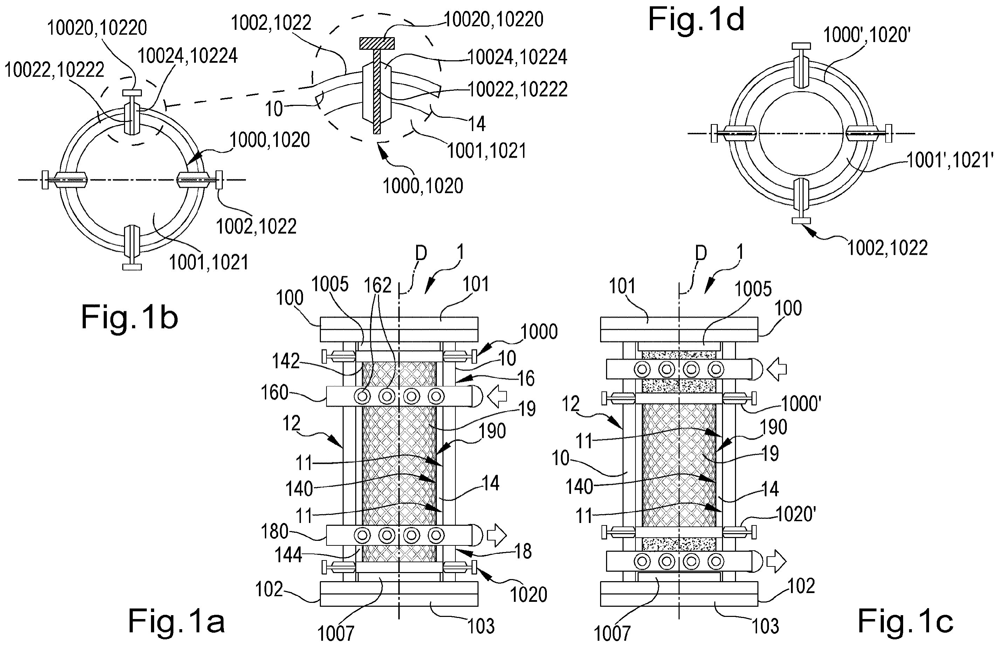

In figure 1a, the number 1 indicates overall a reactor for solid-gas heterogeneous catalysis processes fed by streams of gaseous reagent mixtures that react on the surface of electrified monolithic solid catalysts, comprising a containment shell 10 having a given geometric shape which presents an elongated cavity 11, extending in a given direction D, delimited at the top by a first portion 100 and at the bottom by a second portion 102, provided respectively with an upper cover 101 and a lower cover 103 which hermetically close the shell 10 in abutment with respective first flange 101' and second flange 103' which longitudinally delimit the shell 10. The reactor 1 comprises an operating station 12 which is delimited at the top by the portion 100 and at the bottom by the portion 102 and contains an annular air space 14 which, as described, is delimited externally by the cavity 11 of the shell 10. In addition, without limiting the scope of the present invention, said air space has a cylindrical shape like the cavity 11 and is made of thermally insulating non-metallic material, preferably but without limitation of ceramic type. In particular, the air space 14 is delimited internally by a first wall 140 having given geometric shape similar to that of the cavity 11, therefore substantially cylindrical in the case described here but not necessarily in general.

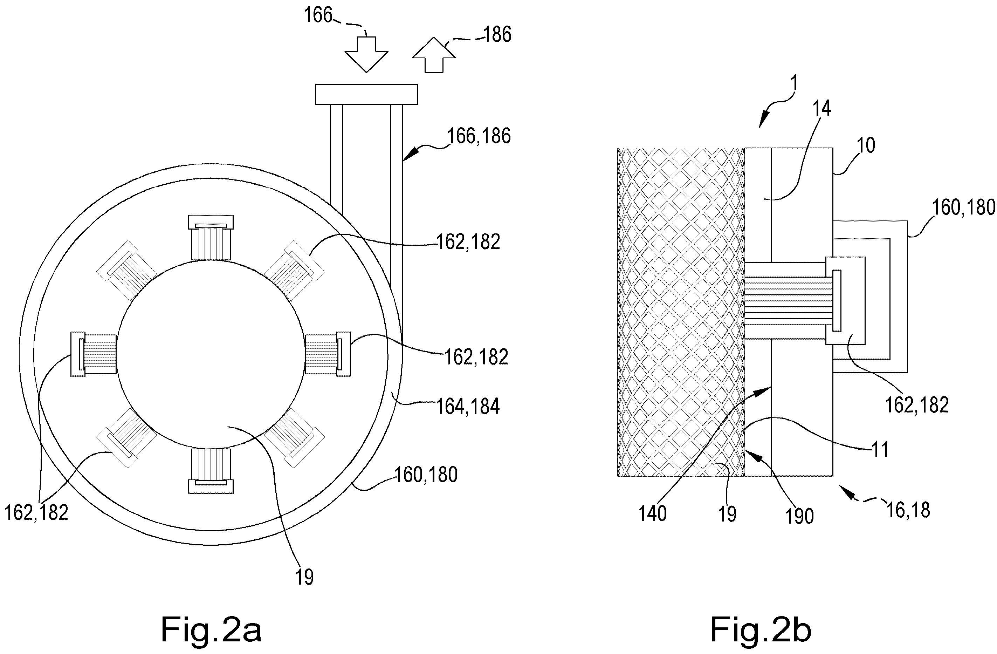

The reactor 1 further comprises a loading station 16 arranged between the upper portion 100 and the operating station 12 and a discharge station 18 arranged between the station 12 and the lower portion 102, where the function of the loading station 16 is to feed the operating station 12 with mixtures of reagents to be chemically combined, while the function of the discharge station 18 is to allow outflow of the chemical reaction products. In this regard, the loading station 16 comprises a first annular distributor 160 of the mixtures of substances to be chemically combined which has a plurality of first feed nozzles 162 (for feeding the reagent mixture) distributed circumferentially at regular intervals and the discharge station 18 comprises a second annular distributor 180 which has a plurality of second discharge nozzles 182 (therefore for outflow of the reaction products), also distributed circumferentially at regular intervals. With particular reference to figure 1a the first distributor 160 has a first annular manifold 164 which contains the first nozzles 162 and has an inlet portion 166 for feeding the first nozzles 162, while the second distributor 180 has a second annular manifold 184 which contains the second nozzles 182 and an outlet portion 186 for conveying to the outside of the reactor 1 the reaction products from the station 12 through the second nozzles 182. Again with particular reference to figure 1a, it is useful to highlight that the first nozzles 162 and the second nozzles 182 are tuyere-shaped, and can be seen more clearly in figures 2a and 2b. With reference to said figures, each of the first nozzles 162 and second nozzles 182 passes through the shell 10 and the air space 14.

Again with reference to figure 1a, the station 12 contains a substantially cylindrical-shaped monolithic body 19 which is made of porous material and can therefore be crossed by the mixtures of reagents and products with low pressure losses; said monolithic body 19 is contained inside the air space 14, delimited peripherally by its second wall 190 shaped in a geometrically conjugate manner with the first wall 140.

With particular reference to figure 1a, each of the first nozzles 162 and second nozzles 182 is in contact externally with the monolithic body 19 through the respective second wall 190, to feed the reagent mixture and, respectively, to remove the reaction products.

The conjugate conformation of the first wall 140 and second wall 190 prevents the reagent mixtures from by-passing the catalytic bed of the monolithic body 19 within the operating station 12, avoiding the drawbacks discussed above.

The monolithic body 19 is made of electrically conductive material. The latter can consist of silicon carbide with various additional silicon contents (formula: SiSiC) introduced to modify the thermal and mechanical resistance and conduction properties thereof, or can consist of other conductive ceramic materials, so that it can be heated by electric current by Joule effect, where said material is structured so that it is suitable to receive and be crossed by the reagent mixture flow. As described above, the monolithic body 19 is designed to transmit the heat necessary to sustain and facilitate the chemical activity of the mixture of reagents fed into it, therefore into the station 12 of the reactor 1. In general, the catalytic body 19 can be made of porous or foam materials, without limiting the scope of the present invention.

In particular, the monolithic body 19 incorporates active catalytic centres consisting of metallic atoms or metallic aggregates, hence it incorporates electrifiable solid catalysts. Therefore, the monolithic body 19 can be electrically heated by Joule effect and its structural conformation described above can be crossed in a diffuse manner by the mixture of reagents, which find an environment suitable for chemically reacting with one another due to the widespread presence of the catalytic centres. Therefore, the monolithic body 19 is suitable for controlling point by point the mixture flow and effectively managing the chemical transformation of the reagents thereof, in addition to allowing easy removal of the reaction product flow.

Again with particular reference to figure 1a, the reactor 1 comprises a first conductor member consisting of a first electrode 1000 arranged above the first distributor 160, delimited peripherally by an upper end portion 142 of the interface 14, and separated from the upper cover 101 by a spacer member 1005 made of insulating material which allows the first electrode 1000 to be locked tightly to the monolithic body 19. With particular reference to figure 1b, the first electrode 1000 comprises a first circular plate 1001 and a plurality of first electric connectors 1002 positioned circumferentially at regular intervals above the first distributor 160 for connection to an external electric power supply circuit known and not illustrated.

The reactor 1 further comprises a second conductor member consisting of a second electrode 1020 arranged below the second distributor 180, delimited peripherally by a lower end portion 144 of the interface 14, and separated from the lower cover 103 by a spacer member 1007 made of insulating material which allows the second electrode 1020 to be locked tightly to the monolithic body 19. With particular reference to figure 1b, the second electrode 1020 comprises a second circular plate 1021 identical to the first plate 1001 in terms of shape and construction material, which is arranged between the lower portion 102 and the monolithic body 19 below the second distributor 180 and comprises a plurality of second electric connectors 1022 identical to the first electric connectors 1002 which are positioned circumferentially at regular intervals below the second distributor 180 for connection to the external electric power supply circuit known and not illustrated. In particular, the first electrode 1000 and the second electrode 1020 are shaped in a conjugate manner to a transverse section of the monolithic body 19, so as to engage the air space 14 in a conjugate manner. Furthermore, the first electrode 1000 and the second electrode 1020 are made of non-metallic conductor material in order to be inert to the chemically activated reagent mixtures in the station 12, and the respective first connectors 1002 and second connectors 1022 have terminals that protrude from the outer profile of the shell 10 of the reactor 1 to be accessible to an electric power supply circuit external to the reactor 1 of known type and therefore not illustrated.

With particular reference to the enlargement of an upper portion of figure 1b, each first/second connector 1002/1022 comprises an external portion 10020/10220 provided with a conductive core 10022/10222 embedded within an insulating sleeve 10024/10224 which hermetically engages the interface 14 and a radial hole obtained in the shell 10.

To minimize the impact of thermo-mechanical stress between the monolithic body 19 and the first electrode 1000 and the second electrode 1020, the latter can be made of the same material as the monolithic body 19, in particular the respective first plate 1001 and second plate 1021.

It is useful to highlight that the air space 14 can be made with casting processes, using insulating and refractory cements having different chemically inert and non-conductive chemical composition, and thermal insulation properties.

The monolithic body 19 can be produced by means of the additive manufacturing process which allows the catalytic centres to be incorporated by mixing active metals within the construction material of the monolithic body 19, avoiding the use of wash-coating processes to make the monolithic body 19 chemically active, and avoiding the use of pellet catalysts within the station 12.

In particular, it is also possible to produce the monolithic body 19 and the air space 14 in a conjugate manner longitudinally on the respective facing portions by means of the additive manufacturing technology, giving the air space 14 a dense continuous structure.

Furthermore, if deemed expedient, the monolithic body 19 and the air space 14 can be made of the same material and, simultaneously, be integral. In this case, a second additional layer will be interposed between the air space 14 and the metal walls of the shell 10, made of insulating material with low heat conductivity with the metal walls of the reactors to avoid the dispersion of heat from the reaction environment and of electricity between the electrically heated monolithic body 19 and the outside of the reactor 1.

Also the first plate 1001 and second plate 1021 of the first electrode 1000 and second electrode 1020 can be produced individually by means of an additive manufacturing process and, if deemed useful, together with the monolithic body 19, so as to be integral with the latter.

The use of the reactor 1 described above can be easily understood and does not require further explanation.

Lastly, it is clear that modifications and variations can be made to the reactor 1 described and illustrated here without departing from the protective scope of the present invention.

In particular, with reference to figures 1c and 1d, the reactor 1 is modified and the first modified electrode 1000, identified by the reference number 1000', has exchanged position with the first distributor 160, and the first circular plate 1001 has been replaced with a first circular annular plate 1001' to allow the reagent mixture to be fed to the monolithic body 19; the same has been done with the second electrode 1020, replaced by a second electrode 1020' identical to the first electrode 1000', the position of which has been exchanged with that of the second distributor 180, and the second plate 1021' has been replaced by a second circular annular plate 1021' identical to the first plate 1001', to allow the reaction products to be fed through the second distributor 180 outside the reactor, without limiting the scope of the present invention, to a tube bundle cooling system (typically a waste heat boiler) or a quencher. The first/second connectors are shaped like the first/second connectors 1002/1022 of figures 1a and 1b.

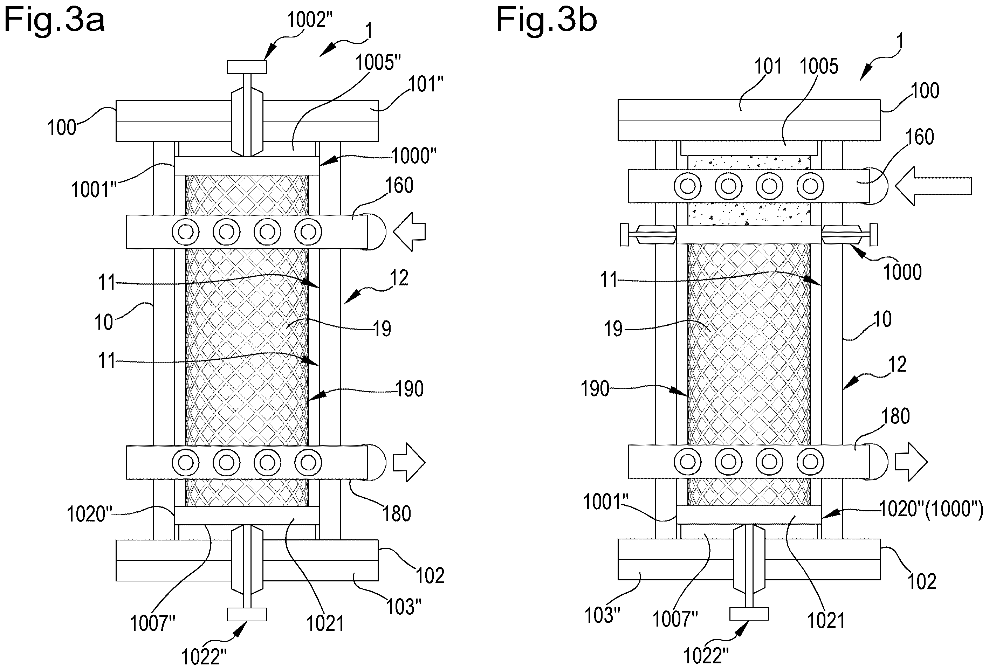

In particular, with reference to figures 3a, in the reactor 1, the first electrode 1000 of figure 1a has been replaced with a first electrode 1000" arranged above the first distributor 160 and provided with a first plate 1001" which is crossed by a first connector 1002"; the latter is structured like each first connector 1002 of figure 1b and hermetically passes through a spacer member 1005'' and an upper cover 101" provided with a central hole. As a replacement for the second electrode 1020 of figure 1a, the reactor 1 comprises a second electrode 1020'' identical to the first electrode 1000", arranged below the second distributor 180 and provided with a second connector 1022" which is structured like each first connector 1002' and passes hermetically through a spacer member 1007" and the lower cover 103", both perforated to house a second connector 1022".

With reference to figure 3b, the reactor 1 is further modified and on the upper portion 100 is shaped as in figure 1c while in the lower part 102 it is shaped as in figure 3a.

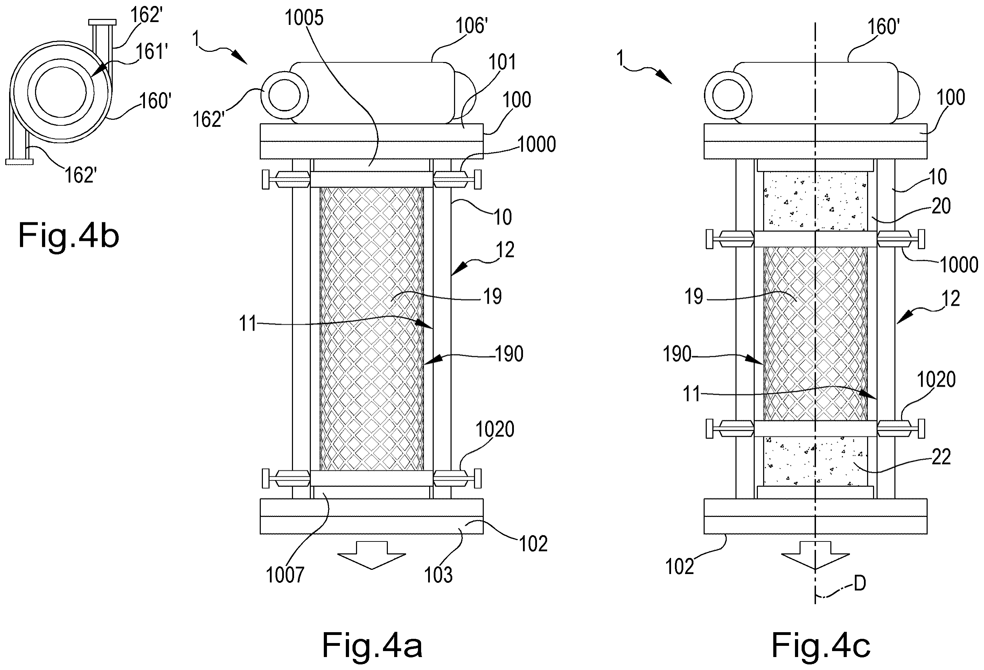

With reference to figure 4a the reactor 1 has a first distributor 160' of the swirling type positioned above the first portion 100 while the reagent outlet is provided on the second portion 102, which is equipped in a known way and not illustrated. The first distributor 160' has an annular channel 161' and two separate inlets 162', positioned laterally at 180° to each other. In this figure the first electrode 1000' and the second electrode 1020' are identical and shaped as in figure 1d to allow the passage of the reagent mixture and discharge of the reaction products respectively.

With reference to figure 4c the monolithic body 19 has a reduced extension in the direction D and equidistant from the upper portion 100 and from the lower portion 102; in particular, the monolithic body 19 is contained between a non-catalytic porous partition 20 positioned between the first portion 100 and the first plate 1001' identical to the one shown in figure 1d, in turn in upper contact with the monolithic body 19. In this way, before the catalytic zone corresponding to the station 12, further mixing of the mixture reagents is allowed, and further pre-heating of the mixture of reagents before they enter the operating station 12, namely the catalytically active zone. In this figure, discharge of the reaction products from the reactor 1 is mediated by a further non-catalytic porous partition 22 positioned between the second plate 1021', identical to the first plate 1001', and the second portion 102.

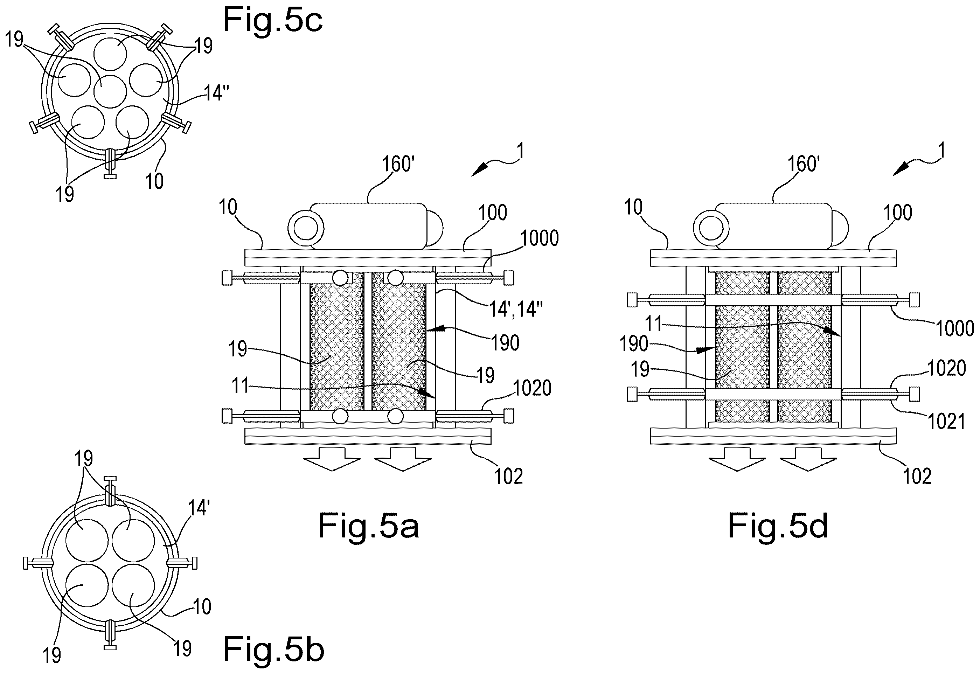

In figure 5a the reactor 1 has the monolithic body 19 organized in a plurality of monolithic cartridges 192 arranged integrally between the first portion 100 and the lower portion 102 inside an insulating body 14' contained within the station 12, which replaces the air space 14, so as to maximize the degree of engagement of the station 12, as can be seen in figures 5b and 5c. The same applies to the reactor 1 of figure 5d: here again, the monolithic body 19 is organized into a plurality of monolithic cartridges 192 but differs from figure 4b due to the fact that the first plate 1001' and the second plate 1021' are spaced farther from the first portion 100 and from the second portion 102. Alternatively, the reactor 1 can be provided with a plurality of monolithic cartridges 192 distributed according to a geometric distribution that maximizes the volume occupied inside the insulating body 14', and therefore inside the operating station 12.

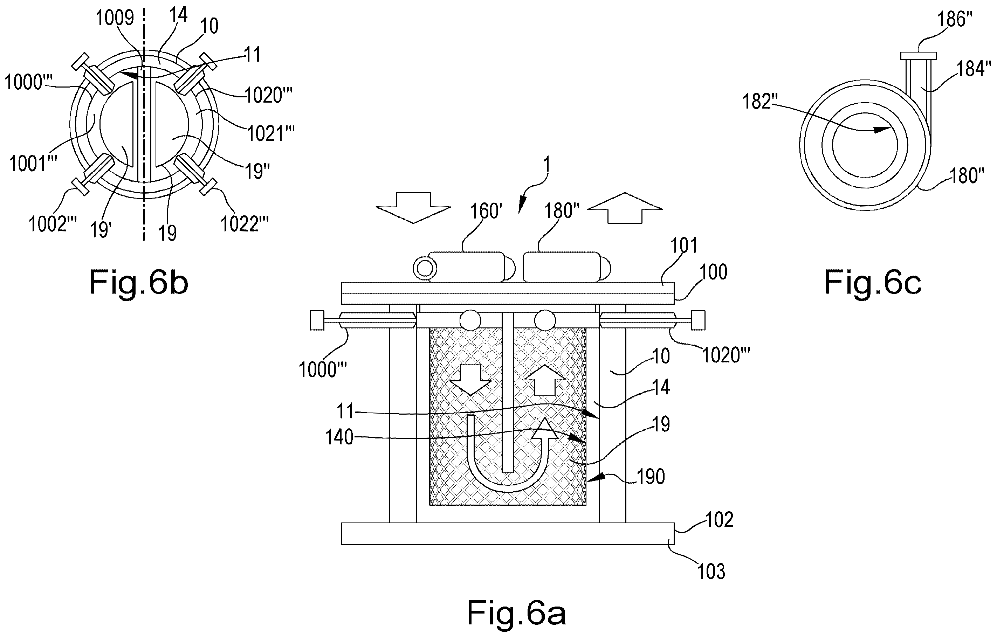

In the case of figure 6a, the monolithic body 19 is organized in two semi-cylindrical portions 19' and 19" contained inside the air space 14, the first portion being the feed portion and the second the discharge portion, side by side and separated for part of the length by a partition 14" made of insulating material which partitions the air space 14, purposely modified. The two semi-cylindrical portions 19' and 19" are connected at the second portion 102 by a connection portion 14‴ of the air space 14 to define a U-shaped channel for the flow of the reagent mixture and, consequently, the reaction products. In this way the inlet of the reagent mixture and the outlet of the reaction products are positioned on the same part of the first portion 100 of the reactor 1 and run through the monolithic body 19 according to a U-shaped path, like the flow of the electric current. Naturally also the first electrode and the second electrode of the preceding figures have been modified so that each of them is shaped in a conjugate manner to the section of the respective semi-cylindrical portion 19' and 19'' of the split monolithic body 19.

With particular reference to figure 6b, the first electrode 1000' and the second electrode 1020' of figure 1d have been replaced by a first electrode 1000‴ and by a second electrode 1020‴ and the first plate 1001' of the first electrode 1000', and the second plate 1021' of the second electrode 1020' have been replaced, respectively, by a first plate 1001‴ and a second plate 1021‴ having annular semi-cylindrical shape, carried coplanar and flanked by the shell 10 at the upper portion 100. The number of respective connectors 1002‴ and 1022‴ is halved with respect to the number in figure 1d. Again with reference to figure 6a, a separator body 1009 separates the first plate 1001‴ and the second plate 1021‴ in order to electrically isolate them.

Further to the above, a feed portion 19' is fluid-dynamically connected to the first distributor 160' of the swirling mixer type as described above and the discharge portion 19" is connected to a further second distributor 180" of the swirling mixer type (figure 6c) provided with a central suction port 182" connected to the discharge portion 19" and provided with an outlet manifold 184" and an outlet nozzle 186", in which the purpose of the second distributor is to cooperate with the first distributor 160' to determine the U-shaped channel inside the reactor 1.

In the case of small and medium-sized industrial processes, the possibility of providing the operating station 12, therefore the monolithic body 19, with granular or pellet catalysts is not excluded.

In the embodiment of the reactor described with reference to figures 6a-6c, the U-shaped monolithic body 19 could be contained, upturned, inside the shell 10 and all the respective components, comprising the first conductor member 1000‴ and the second conductor member 1020‴ are carried in the area of the second portion 102, likewise the distributors 160' and 180", without limiting the scope of the present invention. This embodiment has not been illustrated for obvious reasons of economy of drawing. Further to the above, the teachings discussed with reference to the attached figures allow construction of the reactors 1 which are particularly useful for the industrialization of electrified catalytic reactors for endothermic processes such as:
- steam and CO₂ reforming (SCR) of hydrocarbons,
- reverse water gas shift (RWGS) of mixtures with high H₂ and CO₂ content,
- steam cracking of hydrocarbons for the production of olefins,
- ammonia cracking reactions.

However, the reactor solutions defined can be applied to any heterogeneous catalytic process that could benefit from use of the proposed reactor solutions including exothermic catalytic reactions that can benefit from the use of electrified catalytic reactors for preheating the reagent mixtures and overcoming the activation energies of the slow stages of the reaction paths.

To conclude, it should be noted that the reactor 1 is suitable for chemically combining mixtures of reagents that interact indifferently through endothermic or exothermic catalytic reactions.

In the claims, any reference sign in brackets shall not be interpreted as a limitation of the claim. The words "which comprises" do not exclude the presence of other elements or phases in addition to those listed in a claim. Furthermore, the term "one", as used in this context, is defined as one or more than one. Furthermore, the use of introductory expressions such as "at least one" and "one or more" in the claims shall not be interpreted in the sense that the introduction of another claim element identified using the indefinite article "a" or "an" limits any particular claim in which said claim element appears singly, even when said claim comprises introductory expressions such as "one or more" or "at least one" and indefinite articles like "a" or "an". The same applies to the use of definite articles. Unless established otherwise, terms such as "first" and "second" are used to arbitrarily distinguish the elements which said terms describe. Therefore, these terms are not necessarily intended to indicate a time-related or other priority of said elements. The simple fact that some measurements are given in reciprocally different claims does not indicate that a combination of these measurements cannot be used to advantage.

## Claims

1. A reactor (1) for heterogeneous catalysis processes in which a containment shell (10) is delimited by a first upper portion (100) and a second lower portion (102) and internally by an elongated cavity (11); provided with an operating station (12) arranged in an intermediate position between said first upper portion (100) and said second portion (102) and internally delimited by an air space (14) internally delimited by a first wall (140) having geometric shape similar to that of said cavity (11); at least one monolithic body (19) contained inside said air space (14), made of non-metallic material, structured so that a mixture of reagents can pass through it and electrically conductive in order to be electrically heatable by Joule effect so as to trigger and effectively control a chemical transformation reaction of said mixture; each said monolithic body (19) being delimited peripherally by a second wall (190); **characterized in that** each said monolithic body (19) incorporates active catalytic centres and said second wall (190) is shaped in a geometrically conjugate manner with said first wall (140).

2. The reactor according to claim 1, **characterized in that** said active catalytic centres are composed of metallic atoms or active metallic aggregates mixed with construction material of each said monolithic body (19).

3. The reactor according to claim 1 or 2, **characterized in that** each said monolithic body (19) is associated with a first conductor member (1000, 1000', 1000", 1000‴) and a second conductor member (1020, 1020', 1020", 1020‴) for the relative electrification, both made of non-metallic materials inert to said reagent mixtures.

4. The reactor according to claim 3, **characterized in that** said conductor members (1000, 1020) comprise respectively a first plate (1001) (1001') (1001‴) having circular or annular shape and a second plate (1021) (1021') (1021‴) having circular or annular shape, electrically connected to said monolithic body (19) on sides opposite to said operating station (12) or both on the side of said first upper portion (100) or both on the side of said second lower portion (102).

5. The reactor according to any one of the preceding claims, **characterized in that** said air space (14) is made of non-metallic material, preferably of ceramic type, and has the characteristics of an electric insulator and heat shield that reduces heat dispersion from the electrified monolithic body (19) to the outer wall of the reactor.

6. The reactor according to claim 5, **characterized in that** at least one of said monolithic body (19), first plate (1001) (1001') (1001‴) and a second plate (1021) (1021') (1021‴) is produced via an additive manufacturing process or integrally with each said monolithic body (19).

7. The reactor according to claim 6, **characterized in that** said air space (14) is produced by means of casting processes using non-conductive and refractory cements.

8. Electrified catalytic reactors according to claim 6, **characterized in that** said air space (14) is integral with each said monolithic body (19) and is made of the same material as each said monolithic body (19) via an additive manufacturing process or via processes that allow the continuous joining thereof.

9. The reactor according to any one of the preceding claims, **characterized in that** it comprises first distributor means (160) (160') (180) (180") provided with a first distributor (160) (160') designed to feed said reagent mixture to said monolithic body (19) and a second distributor (180) (180") designed to discharge said reaction products from said monolithic body (19); said first distributor (160) (160') and second distributor (180) (180") being carried by said first upper portion (100) and, respectively, by said second portion (102) or both by said first lower portion (100).

10. The reactor according to claim 9, **characterized in that** said first distributor (160') is of the swirling type to feed said reagent mixture in a swirling manner to each said monolithic body (19).

11. The reactor according to any one of the preceding claims, **characterized in that** said monolithic body (19) comprises a feed portion (19') and a discharge portion (19") side by side, separated from said air space (14) by a respective partition (14"), and connected on the side of said second portion (102) to define a U-shaped path for a flow of said reagent mixture and relative said reaction products.

12. The reactor according to claim 11, **characterized in that** said first plate (1001‴) is connected to said feed portion (19') and said second plate (1021‴) is connected to said discharge portion (19"), each being shaped in a conjugate manner to the respective said feed portion (19') and to said discharge portion (19").

13. The reactor according to any one of the claims 1-12, **characterized in that** at least one said monolithic body (19) is organized in a plurality of monolithic cartridges (192) arranged integrally between said first upper portion (100) and said second lower portion (102) inside said operating station (12).

14. The reactor according to any one of the preceding claims, **characterized in that** each said monolithic body (19) is designed to contain granular or pellet catalysts.
